# EUROPEAN PATENT APPLICATION

(11) **EP 3 139 335 A1**
(43) Date of publication of application: **08.03.2017**
(21) Application number: 16187067.0
(22) Date of filing: 02.09.2016
(51) Int. Cl.: G06Q 50/00

(54) **ELECTRONIC PROCESSING SYSTEM WITH SOCIAL GAMING NETWORK MECHANISM WITH PARENTAL CONTROL AND METHOD OF OPERATION THEREOF**

(30) Priority: 04.09.2015 US 201562214471 P; 08.08.2016 US 201615231127
(71) Applicant: Sony Interactive Entertainment Network America LLC, San Mateo, CA 94404 (US)
(72) Inventor: Kunieda, Shunsuke, San Diego, CA California 92127 (US); Downes, Michelle, San Diego, CA California 92127 (US); Kruawongwanich, Wivat, San Diego, CA California 92127 (US)
(74) Representative: D Young & Co LLP

(57) **Abstract**

An electronic processing system, and a method of operation thereof, including: an entry module for providing an entry point for utilizing a comment feature in a social gaming network; a presentation module, coupled to the entry module, for generating a gallery view based on the entry point; a control module, coupled to the presentation module, for determining a parental control for the comment feature; and a comment module, coupled to the control module, for entering a comment in the gallery view and for accessing the comment based on the parental control for displaying on a screen.

## Description

### CROSS-REFERENCE TO RELATED APPLICATION(S)

This application claims the benefit of U.S. Provisional Patent Application serial number 62/214,471 filed September 4, 2015

The present invention relates generally to an electronic processing system and more particularly to a system for electronic processing with social network.

Social networking is a practice of expanding a number of one's business and/or social contacts by making connections through individuals. While social networking has gone on almost as long as societies have existed, an unparalleled potential of the Web to facilitate such connections has been recognized and exploited, through Web-based groups established for that purpose.

The world of the Internet is changing rapidly. Social networking allows users to become increasingly comfortable with making a significant percentage of their purchases online. Over the past years, there has been a remarkable transformation in the kind of content available online. Video in both short form and long form is now readily available through multiple portals and platforms. However, electronic processing systems that support the social networking are currently still encountering problems due to lack of innovative solutions that effectively deliver quality of contents to target audiences.

Thus, a need still remains for an electronic processing system that delivers innovation and technological advances to enable the users to effectively share and efficiently distribute proper contents within social networks. In view of the increasing demand for such electronic processing systems, it is increasingly critical that answers be found to these problems. In view of the ever-increasing commercial competitive pressures, along with growing consumer expectations and the diminishing opportunities for meaningful product differentiation in the marketplace, it is critical that answers be found for these problems. Additionally, the need to reduce costs, improve efficiencies and performance, and meet competitive pressures adds an even greater urgency to the critical necessity for finding answers to these problems.

Solutions to these problems have been long sought but prior developments have not taught or suggested any solutions and, thus, solutions to these problems have long eluded those skilled in the art.

Embodiments of the present invention provide a method of operation of an electronic processing system including: providing an entry point for utilizing a comment feature in a social gaming network; generating a gallery view based on the entry point; determining a parental control for the comment feature; entering a comment in the gallery view; and accessing the comment based on the parental control for displaying on a screen.

The embodiments of the present invention provide an electronic processing system, including: an entry module for providing an entry point for utilizing a comment feature in a social gaming network; a presentation module, coupled to the entry module, for generating a gallery view based on the entry point; a control module, coupled to the presentation module, for determining a parental control for the comment feature; and a comment module, coupled to the control module, for entering a comment in the gallery view and for accessing the comment based on the parental control for displaying on a screen.

Certain embodiments of the invention have other steps or elements in addition to or in place of those mentioned above. The steps or the elements will become apparent to those skilled in the art from a reading of the following detailed description when taken with reference to the accompanying drawings.
FIG. 1 is a system block diagram of an electronic processing system with a social network mechanism in an embodiment of the present invention.
FIG. 2 is an example of a view displayed in the electronic processing system of FIG. 1.
FIG. 3 is an example of the gallery view.
FIG. 4 is a first example of the screenshots of the shared contents.
FIG. 5 is a second example of the screenshots of the shared contents.
FIG. 6 is an example of a process flow for generation of the gallery view.
FIG. 7 is an example of a process flow for generation of the shared contents in the electronic processing system of FIG. 1.
FIG. 8 is a first portion of a detailed process flow of the comment feature of FIG. 2.
FIG. 9 is a second portion of the detailed process flow of the comment feature of FIG. 2.
FIG. 10 is a third portion of the detailed process flow of the comment feature.
FIG. 11 is a fourth portion of the detailed process flow of the comment feature of FIG. 2.
FIG. 12 is a fifth portion of the detailed process flow of the comment feature of FIG. 2.
FIG. 13 is a sixth portion of the detailed process flow of the comment feature of FIG. 2.
FIG. 14 is a flow chart of a method of operation of an electronic processing system in a further embodiment of the present invention.

The following embodiments are described in sufficient detail to enable those skilled in the art to make and use the invention. It is to be understood that other embodiments would be evident based on the present disclosure, and that system, process, or mechanical changes may be made without departing from the scope of the embodiments of the present invention.

In the following description, numerous specific details are given to provide a thorough understanding of the invention. However, it will be apparent that the invention may be practiced without these specific details. In order to avoid obscuring the embodiments of the present invention, some well-known circuits, system configurations, and process steps are not disclosed in detail.

The drawings showing embodiments of the system are semi-diagrammatic and not to scale and, particularly, some of the dimensions are for the clarity of presentation and are shown exaggerated in the drawing FIGs.

Where multiple embodiments are disclosed and described having some features in common, for clarity and ease of illustration, description, and comprehension thereof, similar and like features one to another will ordinarily be described with similar reference numerals. The embodiments have been numbered first embodiment, second embodiment, etc. as a matter of descriptive convenience and are not intended to have any other significance or provide limitations for the embodiments of the present invention.

The term "module" referred to herein can include software, hardware, or a combination thereof in the embodiments of the present invention in accordance with the context in which the term is used. For example, the software can be machine code, firmware, embedded code, and application software. Also for example, the hardware can be circuitry, processor, computer, integrated circuit, integrated circuit cores, a microelectromechanical system (MEMS), passive devices, environmental sensors including temperature sensors, or a combination thereof.

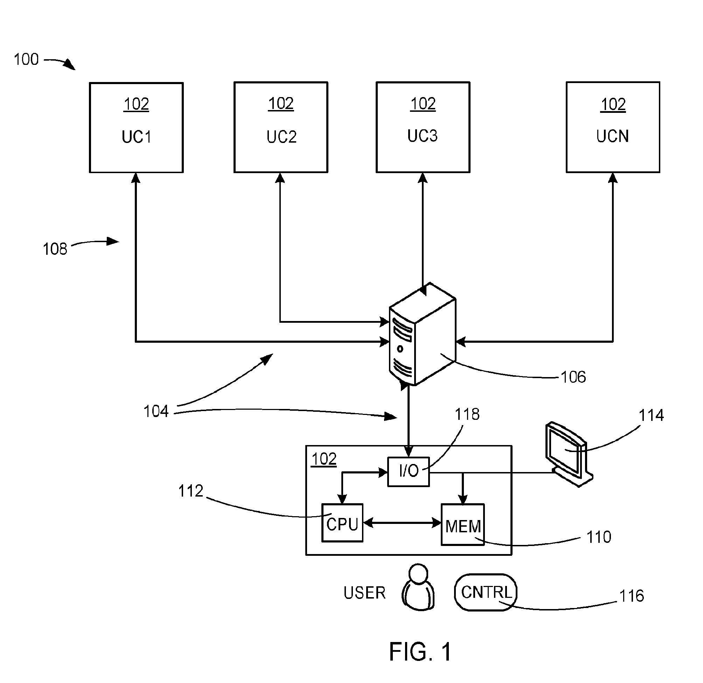

Referring now to FIG. 1, therein is shown a system block diagram of an electronic processing system 100 with a social network mechanism in an embodiment of the present invention. The system block diagram shows a plurality of game consoles 102 utilized by users in a social gaming network 104.

The game consoles 102 are devices that process information including video signals and visual images for video games. For example, the game consoles 102 can include PlayStation 4 (PS4) and any other video game consoles. Also for example, the game consoles 102 can include tablets, PlayStation Vita, handheld game consoles, or any other portable gaming devices.

The social gaming network 104 provides interconnections of platforms, systems, and applications for exchanging information. In the social gaming network 104, networked computing devices exchange data with each other using a data link between nodes that are established using either cable media or wireless media. For example, the social gaming network 104 can include a PlayStation Network (PSN) and any other gaming networks.

The users can engage in game plays or other activities. Information relating to such activities can be sent to a number of servers 106. The servers 106 are devices that manage access to a centralized resource or service in a network. The social gaming network 104 includes a number of user connections 108 (UC) between the game consoles 102 and the servers 106. The user connections 108 are the interconnections that provide communications mechanisms for exchanging information among the platforms, the systems, and the applications.

The electronic processing system 100 can include one or more of the servers 106 used for obtaining information relating to the activities of the users from the game consoles 102. The information relating to the activities of the user connections 108 is transmitted to a storage device 110 in each of the game consoles 102 for later presentation on a display.

For example, the activities can include game plays or any other actions or events of the users associated with the video games. Also for example, the storage device 110 can include volatile and nonvolatile memory devices.

The users can see all comments posted by the user connections 108. The comments and game shares including screen shots can be handled by a processor 112 of each of the game consoles 102. For example, the processor 112 can include a central processing unit (CPU) or any other computing devices.

Display devices 114 can be separate from the game consoles 102 or integrated within the game consoles 102. The display devices 114 output the video signals or the visual images for the video games.

Controllers 116 are devices that the users utilize with game or entertainment systems to manipulate or control the game consoles 102. The controllers 116 provide input to the video games to control objects or characters in the video games. The controllers 116 can be separate from the game consoles 102 or integrated within the game consoles 102. For example, the controllers 116 can include G-Shock controllers or any other control devices.

Each of the game consoles 102 includes an input/output unit 118 (I/O) for providing input and output functions or data transmission. The input/output unit 118 provides the data transmission between the game consoles 102 and the servers 106, the display devices 114, and the controllers 116.

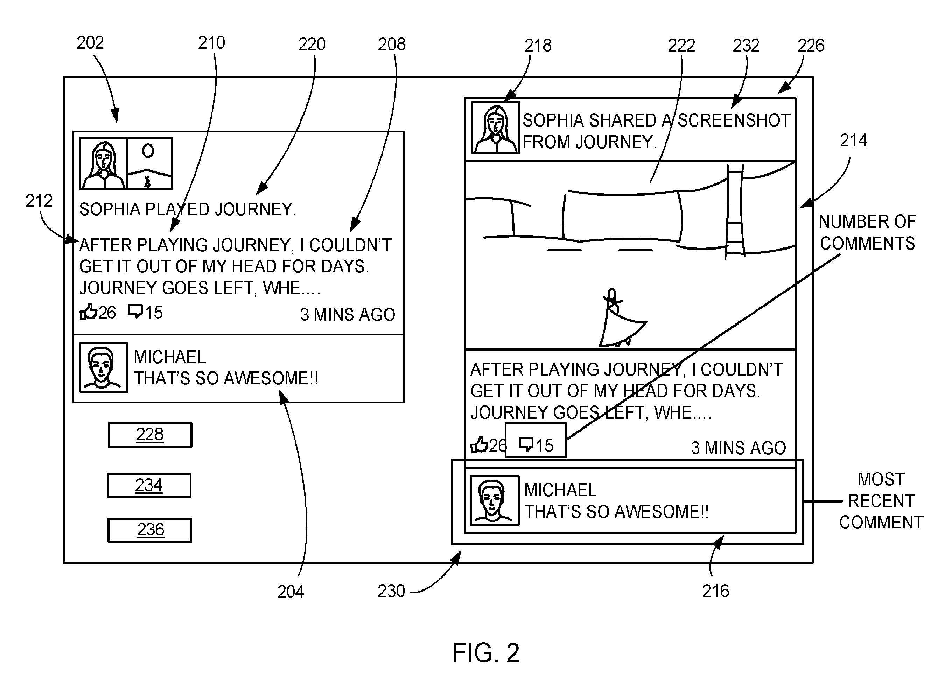

Referring now to FIG. 2, therein is shown an example of a view displayed in the electronic processing system 100 of FIG. 1. The displayed view can include a grid view 202. The grid view 202 allows users to control including view, add, or edit comments 204.

The electronic processing system 100 can include the social gaming network 104 of FIG. 1 with a comment feature 208 for activities 210. The comment feature 208 is utilized in the social gaming network 104 to allow the users to engage directly with stories 212, the activities 210, and shared contents 214 by starting a conversation 216 around the shared contents 214.

For example, the comment feature 208 can be utilized by the game consoles 102 of FIG. 1. Also for example, the comment feature 208 can be utilized in applications on mobile devices including mobile phones. Further, for example, the comment feature 208 can be utilized in applications including web browsers on computing systems including personal computers (PC).

The comment feature 208 allows the users to share the comments 204, interact on the social gaming network 104, store the shared contents 214 of interest, and verify user accounts 218 to receive feedbacks from players of the social gaming network 104. The electronic processing system 100 focuses on a concept of the comments 204 and sharing of the shared contents 214 in a social gaming platform over the social gaming network 104. For example, the social gaming network 104 can include a PlayStation Network (PSN).

The electronic processing system 100 can support the comment feature 208 for the activities 210. The activities 210 relate to actions performed by the users in the social gaming network 104.

The activities 210 can include playing games 220 in the social gaming network 104, capturing videos 222 of the games 220 while the users play the games 220, and downloading and sharing of the videos 222. The activities 210 can include creating the comments 204 about the games 220 when the users find out about the games 220 that will soon be released or when the users have personally played the games 220.

The electronic processing system 100 can include interaction functions on the game consoles 102. The interaction functions can be introduced and supported by a "What's New" menu in the game consoles 102. When the users play the games 220, watch the videos 222, make friends, or participate in any of the games 220 related to the activities 210 introduced through the "What's New" menu, the users can determine what the friends or members of the social gaming network 104 are currently doing in the social gaming network 104.

The comment feature 208 can add the comments 204 to the activities 210 of the users. The users can view the videos 222 of the games 220 uploaded by the friends and then invite each other to play the games 220 together. The users can start the conversation 216 with the friends related to the activities 210 of the friends. At the top level, the users can view the comments 204 that the friends have made. The users can also view a list of the comments 204.

The comments 204 can be supported in a presentation of the activities 210. The comments 204 can be supported in a gallery view 226 of all supported story types. The comments 204 may not be supported in store promotions or publisher promotions. The gallery view 226 displays a list of the comments 204 related to the activities 210.

The comments 204 can be supported in the activities 210 that can be accessed from the "What's New" menu, a "Live Details" menu, or a "Profile" menu. The comments 204 can be supported in both the game consoles 102 and a game app 228, which is a type of software that performs specific tasks for gaming. The comments 204 can be supported in a server-to-server (S2S) support for the activities 210 on a website.

The comments 204 may not be supported in information tiles including "Game/Friend Broadcast", "You May Know", and "Now Playing". The "Game/Friend Broadcast" tile includes information of an application that shows an ongoing game broadcast from friends and/or an ongoing broadcast of a recently played game. The "You May Know" tile includes information of an application that recommends a potential friend to the users based on a number of mutual friends of the potential friend and the users. The "Now Playing" tile includes information of an application that surfaces friends' ongoing game plays and gives availability to the users to jump into the games 220 in play together or to request to start broadcasting so that the users can jointly watch the game plays.

The grid view 202 displays a total number of the comments 204 as well as the most recent one at the very bottom of a story tile. The grid view 202 excludes or does not display the comments 204 if the total number of the comments 204 is zero (0).

The grid view 202 can show on story tiles in "What's New" or "live details" menus. The grid view 202 can show the total number of the comments 204 and one of the comments 204 that is the most recent. The one of the comments 204 is information about the activities 210 most recently available among all of the comments 204.

The FIG. 2 shows an example of one of screens 230 of the display devices 114 of FIG. 1 after the "What's New" menu is selected. The screens 230 are flat panels or areas on electronic devices including a television, a computer, or a smartphone, on which multimedia information are displayed.

On the left side, the user can tell the stories 212 of one of the games 220 named Journey. On the right side, Sophia shares screenshots 232 of the stories 212 about Journey. There can be the stories 212 and the screenshots 232 of other users. The stories 212 can include information indicating that a user is now a friend of another user. The users can scroll down to view another of the stories 212 or another of the screenshots 232.

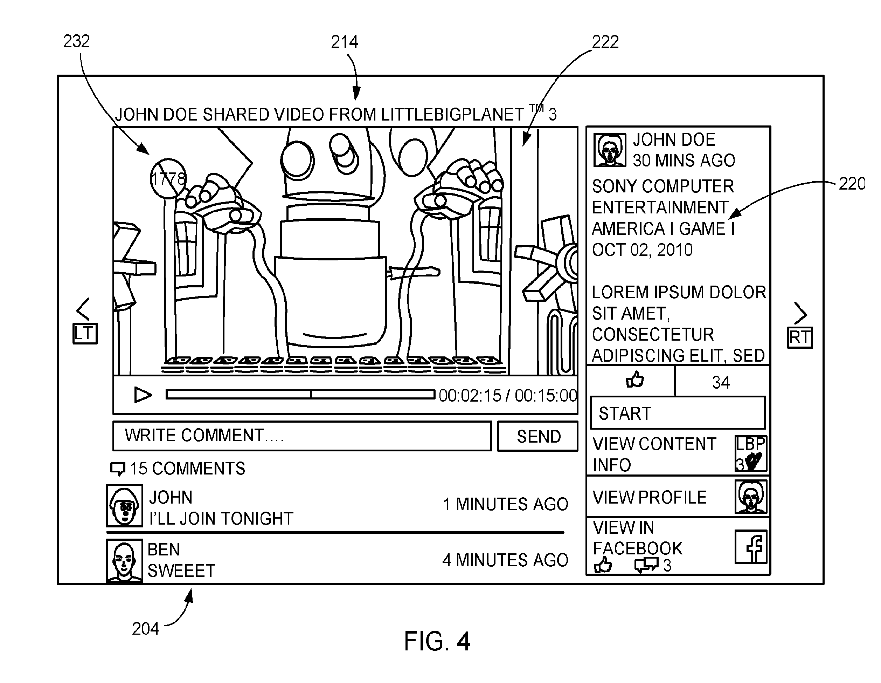

When the users select one of the tiles, the electronic processing system 100 can allow the users to completely view one of the stories 212 as shown by another example subsequently described in FIG. 4. The users can also share private information 234 about a user profile 236 when the user profile 236 has been changed, the games 220 that the users prefer, or the comments 204 that the users have made. The private information 234 is not shared in public when the other users do a global search in the social gaming network 104.

It has been discovered that the comment feature 208 encourages sharing of the shared contents 214, inspires interactions on the social gaming network 104, and provides more ways to discover contents.

It has also been discovered that the comment feature 208 allows storing and verifying the user accounts 218 to receive the feedbacks from players.

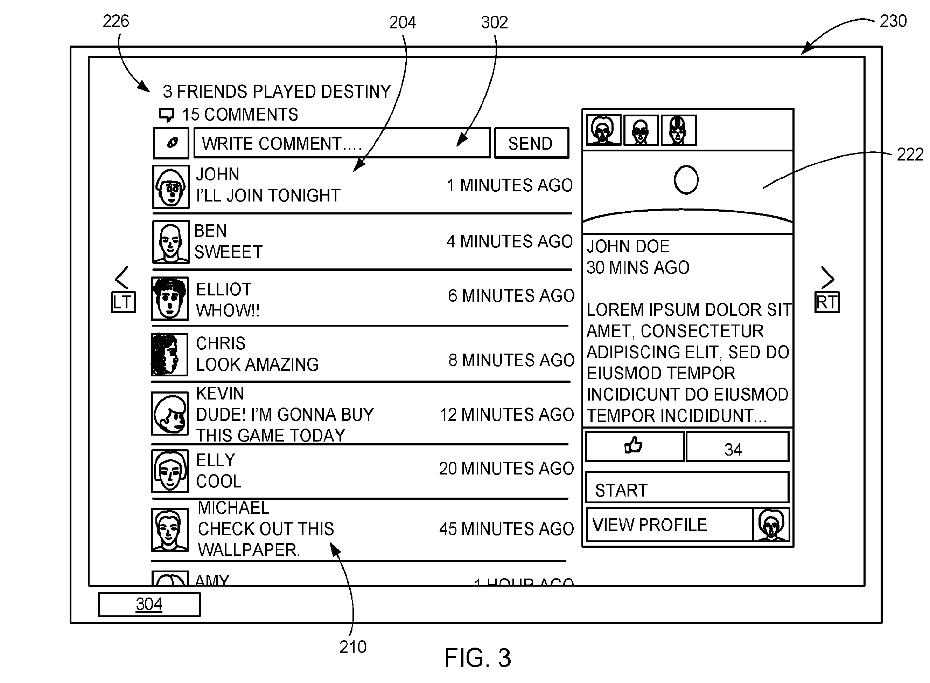

Referring now to FIG. 3, therein is shown an example of the gallery view 226. The example shows a new layout for the gallery view 226 in order to accommodate a function of the comments 204.

The gallery view 226 can be generated and presented on the screens 230. The new layout enables the users to read or write the comments 204 while the users are viewing the videos 222 in the top-right corner of the screens 230. The comments 204 can be entered during a presentation of the videos 222 on the screens 230.

The gallery view 226 supports text comments or the comments 204. The comments 204 can have a text character limit 302. The text character limit 302 is a numerical value that indicates a maximum number of text characters. For example, the text character limit 302 can include 512 of the text characters.

The gallery view 226 can display a character count 304 for or during a text input of the comments 204. The gallery view 226 may not support Uniform Resource Locator (URL) in the comments 204 that have been descoped or removed from a release of gaming software.

The character count 304 is a numerical value that indicates how many of the text characters that are allowed to be entered. An initial value of the character count 304 is predetermined based on available space on the screens 230 or based on a maximum number of lines available for entry of the comments 204. The character count 304 decrements or counts down by one when a character has been entered for the comments 204.

The users can delete any of the comments 204 that have been made on the activities 210 of the users. The users can delete the comments 204 that the users have made on the activities 210 of other users.

It has been discovered that the character count 304 displayed during the text input of the comments 204 improves a method of effectively receiving the comments 204 from the users without running out of space within limited areas on the screens 230.

It has also been discovered that entering the comments 204 having the text character limit 302 improves a method of effectively receiving the comments 204 from the users without running out of space within the limited areas on the screens 230.

It has further been discovered that the comments 204 can be entered during the presentation of the shared contents 214 including the videos 222 on the screens 230 improve the quality of the information shared among the users in the social gaming network 104 of FIG. 1. The quality is improved because the comments 204 reflect the actual thoughts or feeling that the users experience while viewing the shared contents 214.

It has further been discovered that the gallery view 226 improves the user interface of the gaming software. The interface is improved because the users are able to view all of the comments 204 that have been posted about the activities 210 all in one of the screens 230 without browsing through many websites or blogs, which are time-consuming.

Referring now to FIG. 4, therein is shown a first example of the screenshots 232 of the shared contents 214. The example view shows multiple of the comments 204 posted about the shared contents 214. The shared contents 214 can include the videos 222. The videos 222 can include parts of the games 220 that are played and captured by the users, who played the games 220 and shared the videos 222.

For example, the example view shows that John Doe has shared the videos 222. The users view the videos 222 shared by John Doe about one of the games 220 named the LittleBigPlanet™3.

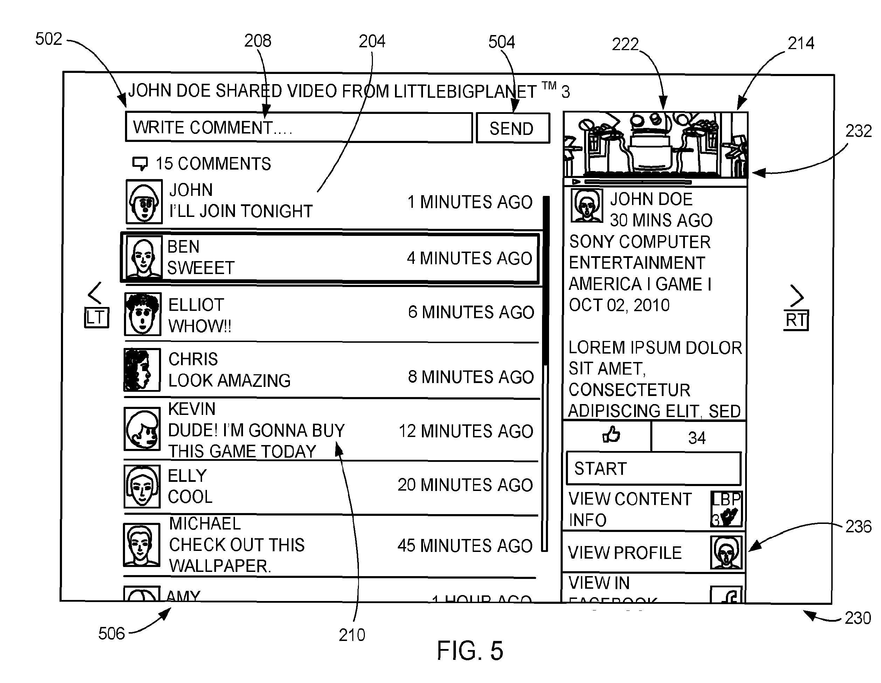

Referring now to FIG. 5, therein is shown a second example of the screenshots 232 of the shared contents 214. The example view shows multiple of the comments 204 posted about the shared contents 214.

The second example shows an additional number of the comments 204 since the shared contents 214 are shown on the upper-right corner of the screens 230 and there is space on the left side of the screens 230 available for presenting the additional number of the comments 204, compared to the first example described above.

The users can view the comments 204 of other people or the other users about the videos 222 showing on the top-right corner of the screens 230. On the right, the users can view content information of the videos 222, the user profile 236 of one of the users who posted the videos 222, and the user profile 236 of the one of the users on a social network including Facebook or any other social networks.

The users can enter the comments 204 by selecting a comment dialog box 502 and type the comments 204 in the comment dialog box 502 and the select a send button 504 to upload the comments 204. The comments 204 can appear in the top of a comment list 506. The comments 204 made by the users can be automatically highlighted at the top of the screens 230 indicating that the users have just entered the comments 204. The users can schedule to play together after they view the activities 210 made by one of the users.

Access to the comments 204 can be controlled or restricted by the users. The users who performed the activities 210 can select or determine which parts of a social graph can submit the comments 204, which parts of the social graph can view the comments 204. For example, John Doe, who is an owner of the activities 210, can select and allow only his friends to view the comments 204 in the activities 210.

It has been discovered that the comment feature 208 has been introduced for the first time by the electronic processing system 100 of FIG. 1 on the social gaming platform or the game consoles 102 of FIG. 1 for the users to interact with other members in the social gaming network 104 of FIG. 1 based on the activities 210.

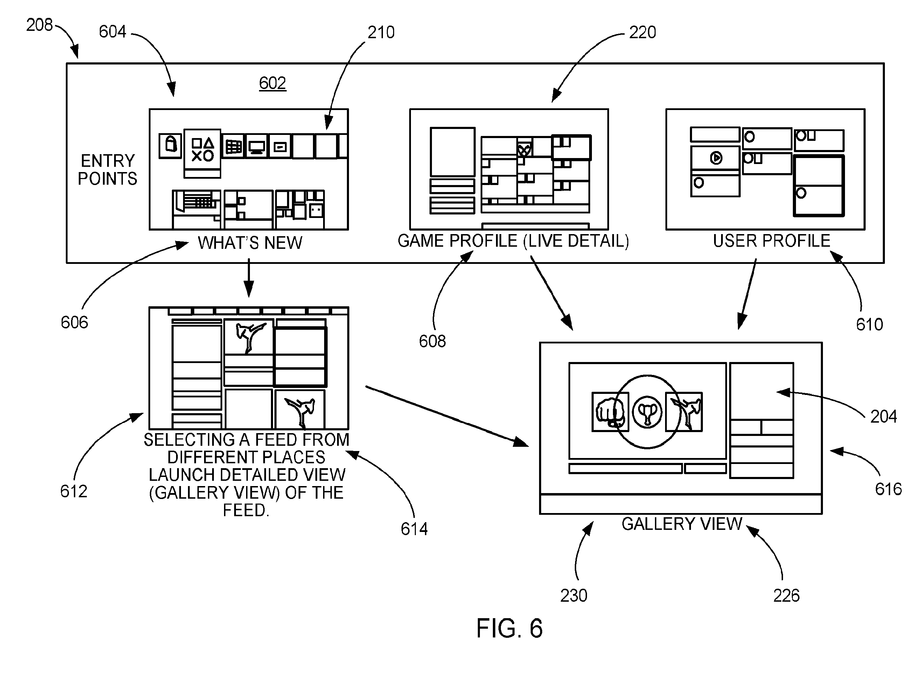

Referring now to FIG. 6, therein is shown an example of a process flow for generation of the gallery view 226. The process flow illustrates a presentation of the comment feature 208 from one of the screens 230 to another of the screens 230.

The electronic processing system 100 of FIG. 1 can include an entry module 602 to provide entry points 604 to support the comment feature 208 associated with the games 220 selected in the social gaming network 104 of FIG. 1. The entry points 604 are options used to generate the gallery view 226. The entry points 604 provide a mechanism for searching and selecting the activities 210 so that the users can initiate the conversation 216 of FIG. 2 to discuss or exchange information about the activities 210.

The users can begin the process flow using any one of the entry points 604 in the electronic processing system 100. The entry points 604 can include a What's New menu 606, a Game Profile menu 608, and a User Profile menu 610.

The What's New menu 606, the Game Profile menu 608, and the User Profile menu 610 are displayed on the screens 230 by the gaming software for the users to select to instruct the gaming software to perform specific functions. The Game Profile menu 608 provides live details of the games 220 that are currently played by the users in the social gaming network 104.

The What's New menu 606 is provided by a social application that lets the users understand or view interesting things or events that are ongoing among the users' friends and in a world of the social gaming network 104. The Game Profile menu 608 is a place where all information or the activities 210 about a specific game or one of the games 220 are curated and to be presented to the users. The User Profile menu 610 is a place where all information or the activities 210 specifically about the users are curated and to be presented to viewers.

After the users select the What's New menu 606, a feed module 612 of the electronic processing system 100 selects content feeds 614 from different places or locations in the social gaming network 104. The content feeds 614 are mechanisms for the users to receive updated data from data sources.

The content feeds 614 can be selected from the different locations including from the What's New menu 606, the Game Profile menu 608, and the User Profile menu 610. The users can select an activity and launch detail view or the gallery view 226 of the activities 210.

The electronic processing system 100 can launch a detailed view or the gallery view 226 of the content feeds 614 to present the comments 204. A presentation module 616 of the electronic processing system 100 generates and presents the gallery view 226 for the users to view based on the entry points 604 selected by the users. The entry module 602 can be coupled to the feed module 612 and the presentation module 616.

The gallery view 226 includes information presented on the screens 230 that show detail information about the activities 210. The gallery view 226 is also a pivot or central point or location for the users to jump to other areas related to or associated with the activities 210. For example, the users can jump to or select to view profiles of other users in the activities 210, the users can jump to store pages or game profiles of the games 220 that are related to or associated with the activities 210.

The entry module 602, the feed module 612, and the presentation module 616 can be implemented with hardware units in the electronic processing system 100. For example, the entry module 602, the feed module 612, and the presentation module 616 can be implemented with the game consoles 102 of FIG. 1, the social gaming network 104 of FIG. 1, the servers 106 of FIG. 1, the user connections 108 of FIG. 1, the storage device 110 of FIG. 1, the processor 112 of FIG. 1, the display devices 114 of FIG. 1, the controllers 116 of FIG. 1, the input/output unit 118 of FIG. 1, or a combination thereof.

It has been discovered that the entry points 604 associated with the games 220 improve the user interface of the gaming software. The interface is improved because the users are able to seamlessly search for the activities 210 without much effort.

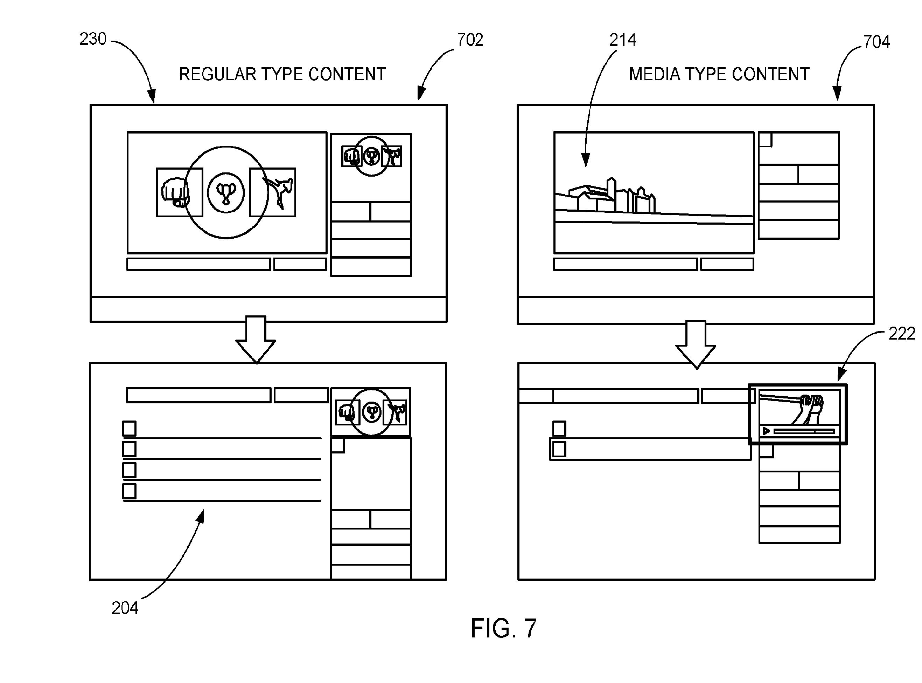

Referring now to FIG. 7, therein is shown an example of a process flow for generation of the shared contents 214 in the electronic processing system 100 of FIG. 1. The shared contents 214 can include a regular type content 702 or a media type content 704.

The regular type content 702 does not include any multimedia information, but the media type content 704 includes the multimedia information. For example, the multimedia information can include the videos 222.

The regular type content 702 presents only the comments 204. However, the media type content 704 can present not only the comments 204 but also the multimedia information. The comments 204 can be viewed as the videos 222 can continue to be played back in the upper-right corner of the screens 230. While the users are viewing the detail information including the comments 204 in the gallery view 226 of FIG. 2, the users can still continue to view playback of the videos 222 without pausing the videos 222.

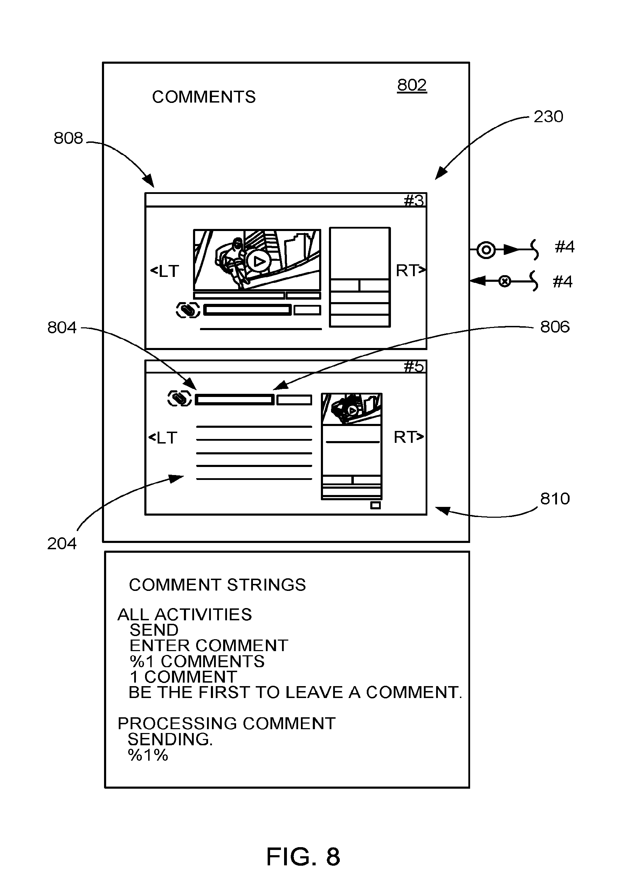

Referring now to FIG. 8, therein is shown a first portion of a detailed process flow of the comment feature 208 of FIG. 2. FIGs. 8-13 show the detailed process flow of the comments 204. The detailed process flow highlights movement or transitions from one of the screens 230 to another of the screens 230.

The comment feature 208 is provided by a comment module 802 in the electronic processing system 100 of FIG. 1. All of the comments 204 can be fully displayed by the comment module 802 when the users scroll down to the bottom of the screens 230 or if the users select a text input field 804, which is an area on one of the screens 230 used for entering the comments 204.

The users can escape or exit out of the comment feature 208 by moving a highlight area 806 to a right Call to Actions (CTA) column or move the highlight area 806 up on the text input field 804. The highlight area 806 is a location on the screens 230 where the users enter information.

The comment module 802 can include a collapse module 808 and an expansion module 810. As shown on one of the screens 230, denoted as #3, when the highlight area 806 is on the text input field 804, the comments 204 are collapsed by the collapse module 808. As shown on another of the screens 230, denoted as #5, when the highlight area 806 is on the text input field 804, the comments 204 are expanded by the expansion module 810.

The highlight area 806 can be selected or deselected by a variety of methods. For example, the highlight area 806 can be selected by moving a cursor and position the cursor on top of or over the text input field 804, and pressing a left button of an electronic mouse or pressing an Enter key on a keyboard or any buttons on a game control device. When none of the users have put or provide the comments 204 on the activities 210 of FIG. 2, a "be the first to leave a comment" message can be shown to encourage the users to add the comments 204.

The comment module 802, the collapse module 808, and the expansion module 810 can be implemented with hardware units in the electronic processing system 100. For example, the comment module 802, the collapse module 808, and the expansion module 810 can be implemented with the game consoles 102 of FIG. 1, the social gaming network 104 of FIG. 1, the servers 106 of FIG. 1, the user connections 108 of FIG. 1, the storage device 110 of FIG. 1, the processor 112 of FIG. 1, the display devices 114 of FIG. 1, the controllers 116 of FIG. 1, the input/output unit 118 of FIG. 1, or a combination thereof.

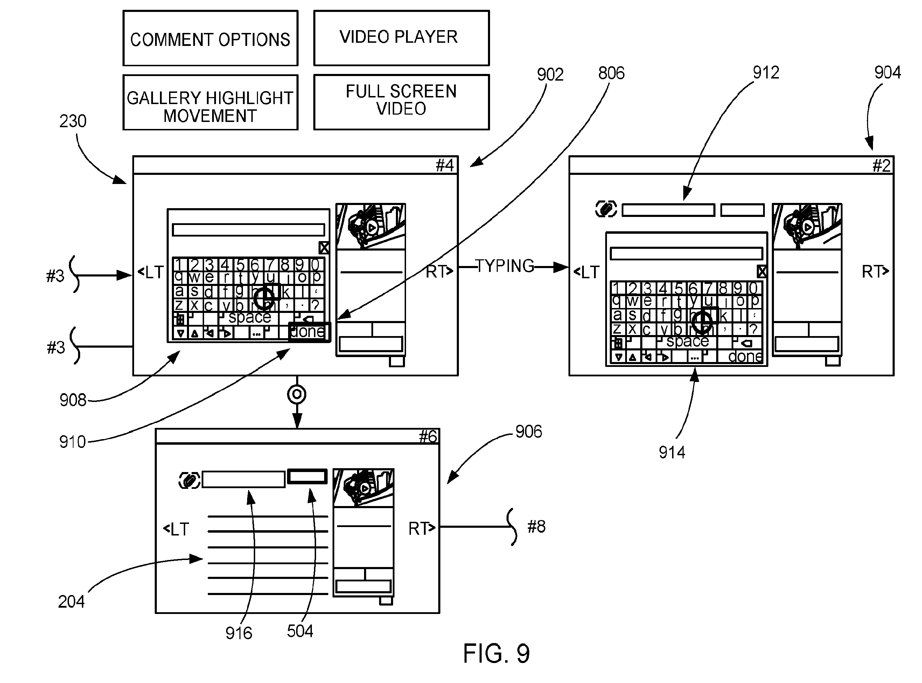

Referring now to FIG. 9, therein is shown a second portion of the detailed process flow of the comment feature 208 of FIG. 2. The electronic processing system 100 of FIG. 1 can include a keyboard module 902, an input module 904, and a submission module 906. The keyboard module 902, the input module 904, and the submission module 906 are denoted as #4, #2, and #6, respectively.

The keyboard module 902 displays a presentation of a keyboard 908 on the screens 230. When the users completely enter the text characters for the comments 204, the users can select a Done key 910 shown on the keyboard 908 to indicate that the users finish entering the comments 204. The Done key 910 is selected by moving the highlight area 806 over the Done key 910 and pressing the left button of the electronic mouse, an enter button, or any other buttons on the game control device.

The input module 904 includes an input field 912 that allows the users to enter text characters 914 of the comments 204. For example, the users can enter letters, numbers, or any other characters as the text characters 914 shown on the keyboard 908. Text of the comments 204 does not populate in a text input box 916 of the submission module 906 until the users are finished and select the Done key 910.

After the users select the Done key 910 using the keyboard module 902, the submission module 906 automatically positions the highlight area 806 over the send button 504. The maximum number of the lines can be up to three (3) for each of the comments 204 in a text column where the text input box 916 is located, whereby each of the lines has a predefined number of characters limited by space available on the screens 230. The users can press a square button on one of the controllers 116 of FIG. 1 to view the videos 222 of FIG. 2 in full screen sizes of the screens 230.

The collapse module 808 of FIG. 8 and the expansion module 810 of FIG. 8 of the comment module 802 of FIG. 8 can be coupled to the keyboard module 902. The keyboard module 902 can be coupled to the input module 904 and the submission module 906.

The keyboard module 902, the input module 904, and the submission module 906 can be implemented with hardware units in the electronic processing system 100. For example, the keyboard module 902, the input module 904, and the submission module 906 can be implemented with the game consoles 102 of FIG. 1, the social gaming network 104 of FIG. 1, the servers 106 of FIG. 1, the user connections 108 of FIG. 1, the storage device 110 of FIG. 1, the processor 112 of FIG. 1, the display devices 114 of FIG. 1, the controllers 116 of FIG. 1, the input/output unit 118 of FIG. 1, or a combination thereof.

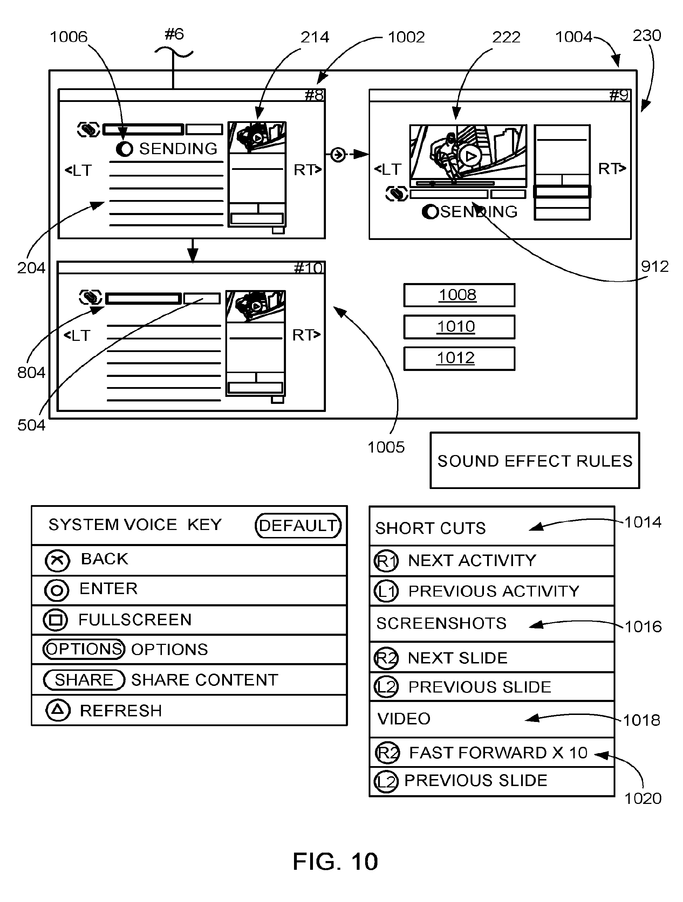

Referring now to FIG. 10, therein is shown a third portion of the detailed process flow of the comment feature 208. The electronic processing system 100 of FIG. 1 can include a first progress module 1002, a second progress module 1004, and a new comment module 1005. The first progress module 1002, the second progress module 1004, and the new comment module 1005 are denoted as #8, #9, and #10, respectively.

The first progress module 1002 displays a wait cursor 1006 while a file 1008 is sent to a location in the social gaming network 104 of FIG. 1 where the file 1008 is to be stored. As an example, the wait cursor 1006 is shown as a spinning wheel. The file 1008 includes all of the comments 204 or the shared contents 214 that are related to each of the activities 210 of FIG. 2.

When the file 1008 has a size 1010 greater than a predetermined threshold 1012, the first progress module 1002 displays the wait cursor 1006 before the file 1008 is saved. The file 1008 can include information about the activities 210. The size 1010 of the file 1008 can exceed the predetermined threshold 1012 if the file 1008 includes multimedia information including the videos 222, images, or audio. The predetermined threshold 1012 is a numerical value in a number of bytes.

While the file 1008 is sent to be stored, the second progress module 1004 collapses the comments 204 such that none of the comments 204 associated with the activities 210 is displayed. Since the comments 204 are collapsed, the videos 222 can be presented above the input field 912 of the comments 204 on the screens 230. The videos 222 can have a dimension or a viewable area greater than a dimension or a viewable area of the videos 222 presented by the first progress module 1002.

When the file 1008 is completely sent and saved, the new comment module 1005 displays one of the comments 204 that is newly created or just made by the users. The new comment module 1005 deactivates the send button 504. The send button 504 is deactivated until the users enter text into the text input field 804.

The electronic processing system 100 can provide shortcuts 1014, which are keys or buttons on the game control device for the users to use to view the activities 210. For example, the users can press a button, depicted as R1, on the game control device to view the next activity and another button, depicted as L1, on the game control device to view the previous activity.

The electronic processing system 100 can provide a screenshot control 1016, which are keys or buttons on the game control device for the users to use to view the screenshots 232 of FIG. 2. For example, the users can press a button, depicted as R2, on the game control device to view the next slide and another button, depicted as L2, on the game control device to view the previous slide.

The electronic processing system 100 can provide a video control 1018, which are keys or buttons on the game control device for the users to use to view the videos 222. For example, the users can press a button, depicted as R2, on the game control device to fast-forward a presentation speed 1020 of the videos 222 and another button, depicted as L2, on the game control device to rewind the presentation speed 1020 of the videos 222.

The presentation speed 1020 of the videos 222 can be any numerical value. For example, the presentation speed 1020 can be fast forwarded up to ten times (10x) a normal playback speed of the videos 222. The normal playback speed is a rate, in frames per second, at which the videos 222 are recorded.

The submission module 906 of FIG. 9 can be coupled to the first progress module 1002. The first progress module 1002 can be coupled to the second progress module 1004 and the new comment module 1005.

The first progress module 1002, the second progress module 1004, and the new comment module 1005 can be implemented with hardware units in the electronic processing system 100. For example, the first progress module 1002, the second progress module 1004, and the new comment module 1005 can be implemented with the game consoles 102 of FIG. 1, the social gaming network 104 of FIG. 1, the servers 106 of FIG. 1, the user connections 108 of FIG. 1, the storage device 110 of FIG. 1, the processor 112 of FIG. 1, the display devices 114 of FIG. 1, the controllers 116 of FIG. 1, the input/output unit 118 of FIG. 1, or a combination thereof.

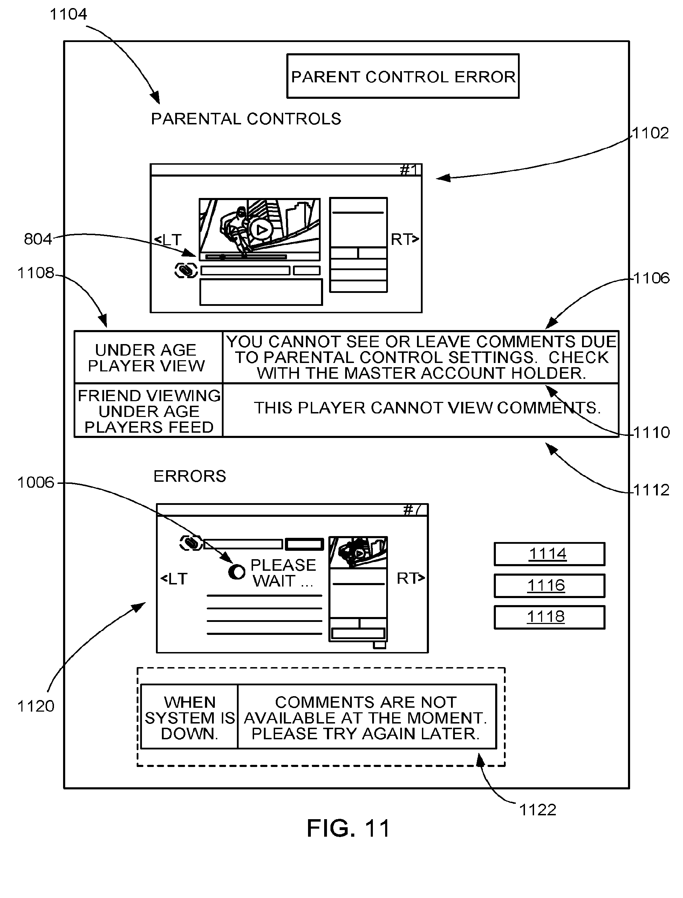

Referring now to FIG. 11, therein is shown a fourth portion of the detailed process flow of the comment feature 208 of FIG. 2. The electronic processing system 100 of FIG. 1 can include a control module 1102, denoted as #1, for managing the comment feature 208 with parental controls 1104 and an error report 1106.

The parental controls 1104 are information that controls access to the comment feature 208 by enabling or disabling the comment feature 208 used by sub-accounts 1108. The parental controls 1104 can restrict or control access to the comment feature 208. The parental controls 1104 are specified by master accounts 1110. The master accounts 1110 and the sub-accounts 1108 are the user accounts 218 of FIG. 2.

The users that own the master accounts 1110 use the parental controls 1104 to control how the users of the sub-accounts 1108 use the comment feature 208. For example, the parental controls 1104 allow or do not allow the sub-accounts 1108 to use the comment feature 208. Also for example, if the parental controls 1104 allow the sub-accounts 1108 to use the comment feature 208, the parental controls 1104 can restrict the sub-accounts 1108 to view, add, edit, delete, or a combination thereof the comments 204 of FIG. 2.

The comments 204 are not displayed if the parental controls 1104 block, lock, or do not allow the sub-accounts 1108 from receiving or sending the comments 204. If the parental controls 1104 lock the sub-accounts 1108 from using the comments 204, the text input field 804 is deactivated and the error report 1106 displays an error message 1112. The error message 1112 can be viewed by underage players of the sub-accounts 1108.

For example, if the comment feature 208 is locked for the users of the sub-accounts 1108 who are the underage players, the error message 1112 indicates that use of the comment feature 208 is not allowed for the sub-accounts 1108 or the sub-accounts 1108 cannot view, or leave or add the comments 204 due to settings of the parental controls 1104. Also for example, the error message 1112 also indicates that the sub-accounts 1108 are to check with master account holders of the master accounts 1110 to have permissions to use the comment feature 208 changed from disable to enable.

Further, for example, the error message 1112 indicates that friends of the underage players cannot view the comments 204 if the comment feature 208 is disabled by the parental controls 1104 associated with the sub-accounts 1108. Yet further, for example, the master account holders can be parents or legal guardians of the underage players.

The parental controls 1104 provide a mechanism for control and moderation of the users of the sub-accounts 1108. The parental controls 1104 can include a user-generated media (UGM) flag 1114, which is an identifier that controls how the sub-accounts 1108 are allowed to use the comment feature 208. If the user-generated media (UGM) flag 1114 of the sub-accounts 1108 is on or enabled, the sub-accounts 1108 may not be able to view the comments 204, and make or add the comments 204.

The parental controls 1104 can include a profanity filter 1116 applied to the comments 204 upon posting of the comments 204. In this case, the comments 204 are posted by the master accounts 1110 or the sub-accounts 1108 so that the comments 204 are available for the users to view or access in the social gaming network 104 of FIG. 1. The profanity filter 1116 prevents the sub-accounts 1108 from viewing the comments 204 that are inappropriate for viewing by the underage players of the sub-accounts 1108.

The parental controls 1104 are provided to other modules of the electronic processing system 100 for control of any operations associated with the comments 204. The other modules include the entry module 602 of FIG. 6, the feed module 612 of FIG. 6, the presentation module 616 of FIG. 6, the comment module 802 of FIG. 8, the collapse module 808 of FIG. 8, the expansion module 810 of FIG. 8, the keyboard module 902 of FIG. 9, the input module 904 of FIG. 9, the submission module 906 of FIG. 9. The other modules also include the first progress module 1002 of FIG. 10, the second progress module 1004 of FIG. 10, and the new comment module 1005 of FIG. 10.

For example, the presentation module 616 processes the parental controls 1104. If the parental controls 1104 allow the sub-accounts 1108 to use the comment feature 208, the presentation module 616 retrieves the comments 204

The control module 1102 provides a capability to generate a grief report 1118. The grief report 1118 includes information about individual comments or the comments 204. The grief report 1118 is a feature available to provide a safe environment for the users in the social gaming network 104.

The grief report 1118 is generated when the users detects conflicts in messages or the comments 204 that are inappropriate. The users can report content of the comments 204 and a reason why the content is inappropriate, which will be sent to a moderator of the comments 204 to review and determine an action whether to keep or delete the inappropriate content and warn or remove the user accounts 218 that have violated a code of conduct in the social gaming network 104.

The electronic processing system 100 can include an error module 1120, denoted as #7, for presenting a load message 1122 indicating that there is a problem loading or retrieving the comments 204. The error module 1120 can display the wait cursor 1006 to inform the users to wait. The load message 1122 informs the users that the electronic processing system 100 is down and the comments 204 are not available at the moment. The load message 1122 informs the users to please try again later. The control module 1102 can be coupled to the error module 1120.

It has been discovered that accessing the comments 204 based on the parental controls 1104 improves the technology for providing tools for parents to control unwanted content and also for providing a safe Internet for families. The parental controls 1104 restrict the sub-accounts 1108 of the underage players from using the comment feature 208.

It has also been discovered that the profanity filter 1116 applied to the comments 204 improves the technology for providing tools for parents to control unwanted content and a safe Internet for families. The profanity filter 1116 prevents presentation of the comments 204 that are inappropriate for viewing by the underage players of the sub-accounts 1108.

The control module 1102 and the error module 1120 can be implemented with hardware units in the electronic processing system 100. For example, the control module 1102 and the error module 1120 can be implemented with the game consoles 102 of FIG. 1, the social gaming network 104 of FIG. 1, the servers 106 of FIG. 1, the user connections 108 of FIG. 1, the storage device 110 of FIG. 1, the processor 112 of FIG. 1, the display devices 114 of FIG. 1, the controllers 116 of FIG. 1, the input/output unit 118 of FIG. 1, or a combination thereof.

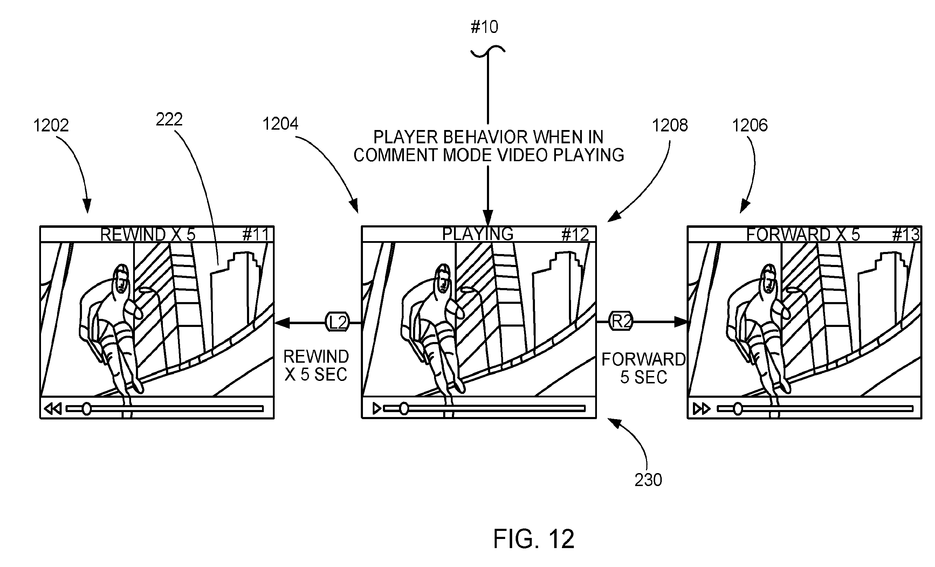

Referring now to FIG. 12, therein is shown a fifth portion of the detailed process flow of the comment feature 208 of FIG. 2. The first portion shows a behavior or an operation of a video player of the videos 222 when in a comment mode or the comment feature 208 while the videos 222 are playing.

The electronic processing system 100 of FIG. 1 can include a rewind module 1202, a play module 1204, and a forward module 1206. The rewind module 1202, the play module 1204, and the forward module 1206 are denoted as #11, #12, and #13, respectively.

The new comment module 1005 of FIG. 10 can be coupled to the play module 1204. The play module 1204 can be coupled to the rewind module 1202 and the forward module 1206.

The rewind module 1202, the play module 1204, and the forward module 1206 control presentation of the videos 222. The rewind module 1202, the play module 1204, and the forward module 1206 allow the users to rewind (RW), play, and fast-forward (FF) the videos 222, respectively. The rewind module 1202 and the forward module 1206 can control the presentation of the videos 222 at any speed in frames per second. For example, the rewind module 1202 and the forward module 1206 can control the presentation of the videos 222 up to five times (5x) a speed at which the play module 1204 presents the videos 222.

The rewind module 1202, the play module 1204, and the forward module 1206 can present the videos 222 in a full view 1208, which has a dimension as large as dimensions of the screens 230. In other words, the videos 222 are presented using the entire areas of the screens 230.

The rewind module 1202, the play module 1204, and the forward module 1206 are accessible to the users for controlling the videos 222 when a comment mode or the comment feature 208 is enabled. The rewind module 1202 and the forward module 1206 are activated by any buttons on the game control device. For example, the users can press a button, depicted as L2, on the game control device to rewind the videos 222 and another button, depicted as R2, on the game control device to forward the videos 222.

A video player in a window that presents the videos 222 can be minimized when the users are using the comment mode or the comment feature 208. The video player can continue to play the videos 222 when the users open the comments 204 of FIG. 2 during playback of the videos 222.

If the video player is paused when going or transitioning into the comment mode or the comment feature 208, the video player's controls are deactivated. When the highlight area 806 of FIG. 8 is not on an area of the screens 230 where the videos 222 are presented, the enter button on the game control device no longer applies to the videos 222. The videos 222 cannot be paused or played using the enter button during the comment mode, but rewinding and fast-forwarding the videos 222 may still be accessible.

The rewind module 1202, the play module 1204, and the forward module 1206 can be implemented with hardware units in the electronic processing system 100. For example, the rewind module 1202, the play module 1204, and the forward module 1206 can be implemented with the game consoles 102 of FIG. 1, the social gaming network 104 of FIG. 1, the servers 106 of FIG. 1, the user connections 108 of FIG. 1, the storage device 110 of FIG. 1, the processor 112 of FIG. 1, the display devices 114 of FIG. 1, the controllers 116 of FIG. 1, the input/output unit 118 of FIG. 1, or a combination thereof.

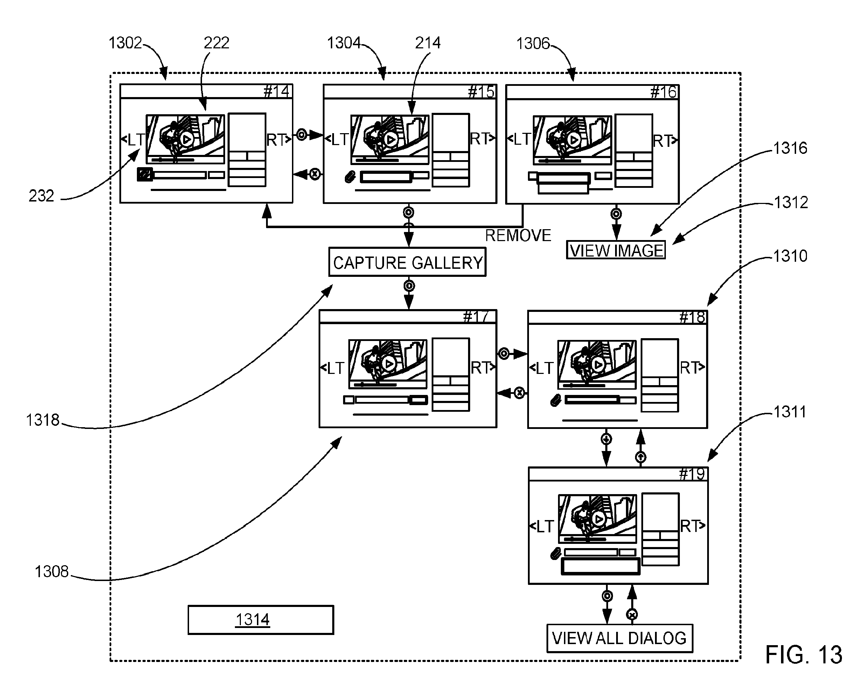

Referring now to FIG. 13, therein is shown a sixth portion of the detailed process flow of the comment feature 208 of FIG. 2. The sixth portion shows a process of how the shared contents 214 can be selected and attached by the users.

The electronic processing system 100 of FIG. 1 can include an attachment module 1302, a selection module 1304, a view module 1306, a send module 1308, a write module 1310, and a display module 1311. The attachment module 1302, the selection module 1304, the view module 1306, the send module 1308, the write module 1310, and the display module 1311 are denoted as #14, #15, #16, #17, #18, and #19, respectively.

The attachment module 1302 allows the users to initiating a process of attaching the videos 222, images 1312, or the screenshots 232 to be used as the shared contents 214. After the process is initiated, the selection module 1304 allows the users to select the videos 222 or the screenshots 232. The videos 222 or the screenshots 232 can be generated during live sessions 1314 of the games 220 of FIG. 2 while the games 220 were played in the social gaming network 104 of FIG. 1.

The view module 1306 allows the users to initiate a process of viewing the images 1312 or to remove an attachment that has been attached, whereby the attachment can include the videos 222, the images 1312, or the screenshots 232. If the attachment is removed, the users can use the attachment module 1302 to initiate the process of attaching the videos 222, the images 1312, or the screenshots 232. If the images 1312 are to be viewed, an image module 1316 in the electronic processing system 100 allows the users to view the images 1312.

The electronic processing system 100 can include a capture module 1318. The capture module 1318 generates the shared contents 214 based on the videos 222 selected by the attachment module 1302 and the selection module 1304.

The capture module 1318 includes an application that captures and generates the gallery view 226 of FIG. 2. The capture module 1318 can provide the gallery view 226 so that the users can see or view all of captured videos or the videos 222 and the screenshots 232, which can be stored locally on the game consoles 102 of FIG. 1. The users can select which of the screenshots 232 or the videos 222 to attach from the gallery view 226 of the capture module 1318.

The users can view all dialogs. Each of the comments 204 of FIG. 2 are selectable. In a case where the users have posted a long one of the comments 204, the viewers can select the long one of the comments 204 and view all text and the screenshots 232 attached in full screens.

The send module 1308, denoted as #17, generates a status where the users have selected one of the screenshots 232 to attach to one of the comments 204. By selecting a "send" button or menu, the screens can transition to the write module 1310, denoted as #18. Now, the users can view that the comments 204 together with the screenshots 232 attached are shown at the top as the comments 204 or the screenshots 232 were posted. The users can move the highlight area 806 of FIG. 8 by pressing a down arrow key or an enter key, as shown in the display module 1311, denoted as #19.

The attachment module 1302 can be coupled to the selection module 1304, the view module 1306, and the capture module 1318. The view module 1306 can be coupled to the image module 1316. The capture module 1318 can be coupled to the send module 1308. The send module 1308 can be coupled to the write module 1310. The write module 1310 can be coupled to the display module 1311.

The attachment module 1302, the selection module 1304, the view module 1306, and the send module 1308 can be implemented with hardware units in the electronic processing system 100. For example, the attachment module 1302, the selection module 1304, the view module 1306, and the send module 1308 can be implemented with the game consoles 102 of FIG. 1, the social gaming network 104 of FIG. 1, the servers 106 of FIG. 1, the user connections 108 of FIG. 1, the storage device 110 of FIG. 1, the processor 112 of FIG. 1, the display devices 114 of FIG. 1, the controllers 116 of FIG. 1, the input/output unit 118 of FIG. 1, or a combination thereof.

The write module 1310, the display module 1311, the image module 1316, and the capture module 1318 can be implemented with hardware units in the electronic processing system 100. For example, the write module 1310, the display module 1311, the image module 1316, and the capture module 1318 can be implemented with the game consoles 102, the social gaming network 104, the servers 106, the user connections 108, the storage device 110, the processor 112, the display devices 114, the controllers 116, the input/output unit 118, or a combination thereof.

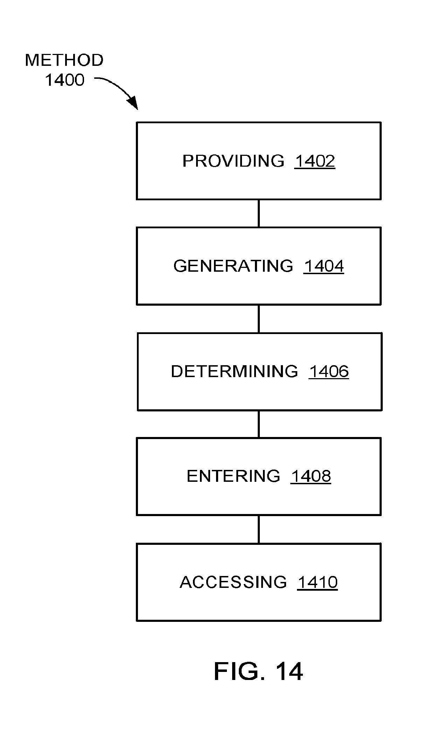

Referring now to FIG. 14, therein is shown a flow chart of a method 1400 of operation of an electronic processing system in a further embodiment of the present invention. The method 1400 includes: providing an entry point for utilizing a comment feature in a social gaming network in a block 1402; generating a gallery view based on the entry point in a block 1404; determining a parental control for the comment feature in a block 1406; entering a comment in the gallery view in a block 1408; and accessing the comment based on the parental control for displaying on a screen in a block 1410.

Thus, it has been discovered that the electronic processing system 100 of FIG. 1 of the embodiments of the present invention furnish important and heretofore unknown and unavailable solutions, capabilities, and functional aspects for the electronic processing system 100 with the social network mechanism. The resulting method, process, apparatus, device, product, and/or system is straightforward, cost-effective, uncomplicated, highly versatile, accurate, sensitive, and effective, and can be implemented by adapting known components for ready, efficient, and economical manufacturing, application, and utilization.

Another important aspect of the embodiments of the present invention is that it valuably supports and services the historical trend of reducing costs, simplifying systems, and increasing performance.

These and other valuable aspects of the embodiments of the present invention consequently further the state of the technology to at least the next level.

While the invention has been described in conjunction with a specific best mode, it is to be understood that many alternatives, modifications, and variations will be apparent to those skilled in the art in light of the aforegoing description. Accordingly, it is intended to embrace all such alternatives, modifications, and variations that fall within the scope of the included claims. All matters hithertofore set forth herein or shown in the accompanying drawings are to be interpreted in an illustrative and non-limiting sense.

Further particular and preferred aspects of the invention are set out in the accompanying independent and dependent clauses. Features of the dependent clauses may be combined with those of the independent clauses and independent claims as appropriate and in combinations other than those explicitly set out in the clauses and claims.
1. An electronic processing system comprising:
   an entry module for providing an entry point for utilizing a comment feature in a social gaming network;
   a presentation module, coupled to the entry module, for generating a gallery view based on the entry point;
   a control module, coupled to the presentation module, for determining a parental control for the comment feature; and
   a comment module, coupled to the control module, for entering a comment in the gallery view and for accessing the comment based on the parental control for displaying on a screen.
2. The system as claimed in clause 1 wherein the comment module is for entering the comment with a comment dialog box in the gallery view.
3. The system as claimed in clause 1 wherein the comment module is for displaying a character count for the comment, the character count decrements by one when a character is entered for the comment.
4. The system as claimed in clause 1 wherein the control module is for applying a profanity filter to the comment upon posting of the comment.
5. The system as claimed in clause 1 wherein:
   the comment module is for entering comments, each of the comments having a text character limit; and
   further comprising:
   a first progress module, coupled to the comment module, for generating a file based on the comments; and
   a second progress module, coupled to the first progress module, for collapsing the comments while the file is stored.
6. The system as claimed in clause 1 further comprising:
   a selection module, coupled to the comment module, for selecting a video of a game for sharing in the social gaming network, the video generated during a live session of the game; and
   a capture module, coupled to the selection module, for generating a shared content based on the video; and
   wherein:
   the comment module is for entering the comment during a presentation of the shared content in the gallery view.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A method of operation of an electronic processing system comprising:
providing an entry point for utilizing a comment feature in a social gaming network;
generating a gallery view based on the entry point;
determining a parental control for the comment feature;
entering a comment in the gallery view; and
accessing the comment based on the parental control for displaying on a screen.

2. The method as claimed in claim 1 further comprising displaying a character count for the comment.

3. The method as claimed in claim 1 further comprising applying a profanity filter to the comment.

4. The method as claimed in claim 1 wherein entering the comment includes entering the comment having a text character limit.

5. The method as claimed in claim 1 further comprising:
selecting a video of a game for sharing in the social gaming network; and
generating a shared content based on the video; and
wherein:
entering the comment includes entering the comment during a presentation of the shared content in the gallery view.

6. A method of operation of an electronic processing system comprising:
providing an entry point for utilizing a comment feature in a social gaming network;
generating a gallery view based on the entry point;
determining a parental control for the comment feature;
entering a comment with a comment dialog box in the gallery view; and
accessing the comment based on the parental control for displaying on a screen.

7. The method as claimed in claim 6 further comprising displaying a character count for the comment, the character count decrements by one when a character is entered for the comment.

8. The method as claimed in claim 6 further comprising applying a profanity filter to the comment upon posting of the comment.

9. The method as claimed in claim 6 wherein:
entering the comment includes entering comments, each of the comments having a text character limit; and
further comprising:
generating a file based on the comments; and
collapsing the comments while the file is stored.

10. The method as claimed in claim 6 further comprising:
selecting a video of a game for sharing in the social gaming network, the video generated during a live session of the game; and
generating a shared content based on the video; and
wherein:
entering the comment includes entering the comment during a presentation of the shared content in the gallery view.

11. An electronic processing system comprising:
an entry module for providing an entry point for utilizing a comment feature in a social gaming network;
a presentation module, coupled to the entry module, for generating a gallery view based on the entry point;
a control module, coupled to the presentation module, for determining a parental control for the comment feature; and
a comment module, coupled to the control module, for entering a comment in the gallery view and for accessing the comment based on the parental control for displaying on a screen.

12. The system as claimed in claim 11 wherein the comment module is for displaying a character count for the comment.

13. The system as claimed in claim 11 wherein the control module is for applying a profanity filter to the comment.

14. The system as claimed in claim 11 wherein the comment module is for entering the comment having a text character limit.

15. The system as claimed in claim 11 further comprising:
a selection module, coupled to the comment module, for selecting a video of a game for sharing in the social gaming network; and
a capture module, coupled to the selection module, for generating a shared content based on the video; and
wherein:
the comment module is for entering the comment during a presentation of the shared content in the gallery view.
